# EUROPEAN PATENT APPLICATION

(11) **EP 2 562 099 A1**
(43) Date of publication of application: **27.02.2013**
(21) Application number: 12174218.3
(22) Date of filing: 28.06.2012
(51) Int. Cl.: B65D 77/22, B65D 81/34

(54) **Flexible, self-venting retortable container**

(30) Priority: 25.08.2011 US 201113218112
(71) Applicant: Bemis Company, Inc, Neenah, WI 54957-0669 (US)
(72) Inventor: Mack, Benjamin Paul, Appleton, WI Wisconsin 54913 (US)
(74) Representative: Ackroyd, Robert

(57) **Abstract**

Containers 10 are disclosed, as well as multilayer films used in such containers, which advantageously maintain a high seal strength even after being subjected to retort conditions for sterilization. These retortable containers and multilayer films are also beneficially self-venting upon exposure to microwave heating, when the internal container pressure exceeds a threshold value. The self-venting nature of these containers arises from particular sealing characteristics, in which the seal width differs in defined, self-venting seal regions 12A, relative to non-venting seal regions 12B of a given peripheral seal 12. Particular structural features and geometries of the self-venting seal regions can be used to improve the location of venting and control of the vented gases.

## Description

### FIELD OF THE INVENTION

The present invention relates to containers useable in thermal processing operations, particularly retort, which also have self-venting characteristics when subjected to microwave cooking. The invention more particularly relates to such containers, in which a peripheral seal has self-venting and non-venting seal regions with differing seal widths.

### DESCRIPTION OF RELATED ART

Retort operations are used for the thermal processing of food and sterilization of all of its primary packaging components. Food packed in a retort container, such as a pouch, is transferred to an autoclave where it is subjected to temperatures generally exceeding the boiling point of water for an extended period. In using the retort process with flexible, sealed containers, special autoclaves are often required to apply an opposing, external pressure that balances the internal pressure on the container walls, due to heating. Also, careful control over the subsequent cooling phase is necessary to prevent the packages from bursting.

In the case of food containers meant for use in microwave ovens, a self-venting feature is beneficial for the controlled release of internal pressure (which, in the oven environment, is not counterbalanced externally) to avoid sudden, undesirable bursting of the container and loss/splattering of its contents. Multilayer packaging materials, which rely on the failure of one of the film layers under elevated temperatures to provide a self-venting feature, are known in the art and described, for example, in US 6,596,355. Such layered materials, while generally acceptable for non-retortable containers used in the packaging of some types of frozen and refrigerated, microwaveable food products, cannot tolerate retort conditions without seal failure. Other containers, known to withstand such conditions, cannot adequately vent the internal pressures arising from microwave heating, or at least not in a controlled manner.

Consequently, there remains a need in the art for materials useful in containers, including pouches (*e.g*., stand-up pouches) and plastic (*e.g.*, polypropylene) containers sealed with multilayer films, which are not only suitable for retort operations, but are also self-venting when heated in a microwave oven. The seal strength of such materials should not be compromised significantly as a result of being subjected to retort temperatures, and the materials should exhibit temperature resistance in terms of not undergoing delamination or material layer degradation.

### SUMMARY OF THE INVENTION

The present invention is associated with the discovery of containers, as well as multilayer films used in such containers, which advantageously maintain a high seal strength even after being subjected to retort conditions for sterilization. Such conditions typically include a temperature in the range from about 110°C (230°F) to about 135°C (275°F) that is normally maintained for 30-60 minutes. These retortable containers and films are also beneficially self-venting upon exposure to microwave heating, when the internal container pressure exceeds a threshold value. The self-venting nature of these containers arises from particular sealing characteristics, as described in greater detail below, in which the seal width differs in defined, self-venting seal regions, relative to non-venting seal regions of a given peripheral seal. Particular structural features and geometries of the self-venting seal regions can also be used to improve the location of venting and control of the vented gases.

Embodiments of the invention are directed to a retortable container comprising a peripheral seal formed by a sealing layer of a multilayer film. The peripheral seal has at least one self-venting seal region with a minimum venting seal width that is less than a minimum non-venting seal width of a non-venting seal region. According to particular embodiments, the peripheral seal does not include any film layer having a melting temperature below that required for retort operations. For example, representative multilayer films, and consequently the seals formed by such films, do not include any film layer having a melting temperature of less than about 90°C (194°F), typically they do not include any film layer having a melting temperature of less than about 100°C (212°F), and often they do not include any film layer having a melting temperature of less than about 110°C (230°F). The peripheral seal includes all the same layers as in the multilayer film. A given peripheral seal, including its self-venting and non-venting seal regions, is generally formed from one type of multilayer film and one type of base material. Also, the self-venting and non-venting seal regions are normally exposed to the same internal container environment. Therefore, with these factors being constant or approximately constant over a given peripheral seal, it is possible to vary the seal thickness and/or geometry in the different seal regions, in order to adjust the ease with which gas venting will occur and other venting characteristics. However, the practice of the present invention does not require these factors to necessarily be constant or substantially constant over the seal regions.

The sealing layer of the multilayer film generally refers to the innermost layer that is exposed to the internal contents of the container, such as food. The sealing layer is used for bonding, at adjacent bonding surfaces, with a base material to form a peripheral seal, normally by heat sealing. The base material may be a rigid or flexible container bottom, for example comprising polypropylene or polyethylene. The base material may also be a second multilayer film of the same type or of a different type as the multilayer film. For example, in embodiments in which the retortable container is formed by folding a multilayer film upon itself and heat sealing the overlapping edges, the multilayer film and base material are necessarily the same, as are their adjacent sealing layers.

Further embodiments of the invention are directed to a retortable container comprising a peripheral seal formed by a sealing layer of a multilayer film. The peripheral seal in a self-venting seal region forms an inward protrusion relative to the peripheral seal in a non-venting seal region. As discussed above, the peripheral seal does not include any film layer having a melting temperature below that required for retort operations (*e.g*., a melting temperature of less than 100°C (212°F)).

According to any of the above embodiments, the particular sealing characteristics advantageously provide a desired, self-venting capability to the retortable containers. In representative containers, gas is discharged through one or more self-venting seal regions, as described herein, when the pressure within the container exceeds a threshold pressure. This threshold pressure is generally at least 1 psig *(i.e.,* 1 psi gauge pressure, or 1 psi above the ambient, surrounding pressure, generally atmospheric), and typically at least 2 psig, and in some cases at least 5 psig. Exemplary threshold pressures that cause the container to vent through a self-venting seal region are in the range from about 2 psig to about 5 psig.

These and other embodiments and aspects relating to the present invention are apparent from the following Detailed Description.

### BRIEF DESCRIPTION OF THE DRAWINGS

FIGS. 1 and 2 depict plan views of representative containers having self-venting and non-venting seal regions.

FIG. 3 depicts a close-up view of the self-venting seal region of the container of FIG. 1.

FIGS. 4A-4C depict geometries of alternative self-venting seal regions.

FIGS. 5A-5C depict cross-sectional views of multilayer films that are suitable for retortable containers described herein.

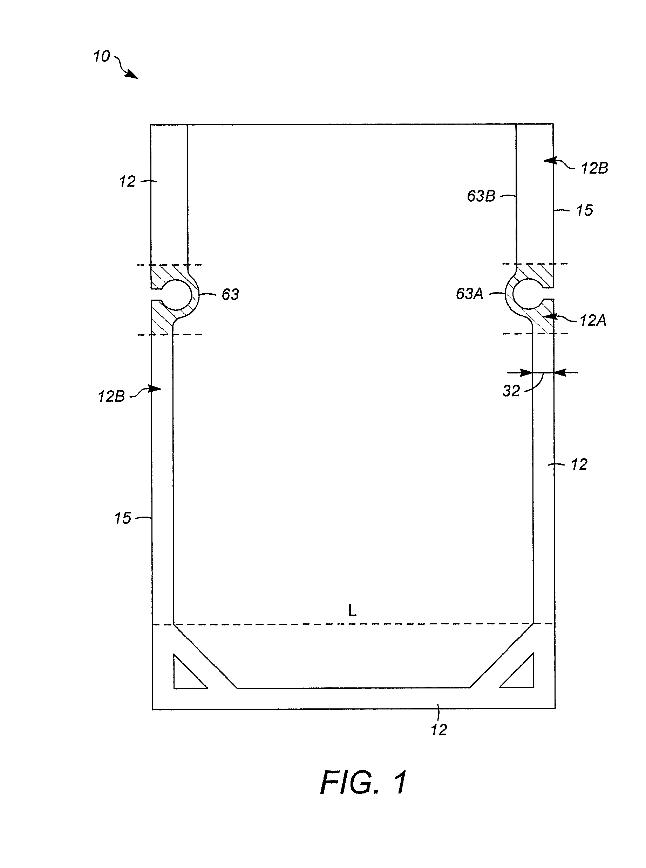

FIGS. 1-5C are intended to illustrate embodiments of the invention by way of example, and not by way of limitation. The features referred to in these figures are not necessarily drawn to scale and should be understood to present an illustration of the invention and/or principles involved. Some features depicted have been enlarged or distorted relative to others, in order to facilitate explanation and understanding. The same reference numbers are used throughout the figures to refer to similar elements and dimensions. Those skilled in the art will appreciate that features of self-venting, retortable containers, according to alternative embodiments of the invention, are determined, in part, by the intended application and also the environment in which they are used.

### DETAILED DESCRIPTION

According to representative embodiments of the invention, retortable containers have a peripheral seal proximate at least one edge. This edge can result, for example, from heat sealing overlapping portions of a single multilayer film, separate multilayer films, or a multilayer film and a container bottom that may be formed of a rigid or flexible plastic material. In the latter case, the container bottom often has a peripheral flange for sealing with the multilayer film, such that it covers the container bottom and thereby encloses the container. The retortable container is self-venting, meaning that gases can escape the container, preferably in a controlled manner, when a threshold pressure (*e.g*., from about 2 psig to about 5 psig) is reached within the container. Such a pressure is normally attained upon heating the container in a microwave oven to a sufficient temperature to vaporize water or ice in the packaged food and/or cause significant expansion of the enclosed gases.

The escape of gases upon heating preferably occurs at defined, self-venting seal regions having a particular construction (*e.g*., in terms of seal width) and geometry (*e.g*., an inward protrusion) that can be varied to adjust the venting characteristics, including the threshold pressure, as well as the direction and even velocity of the escaping vapors.

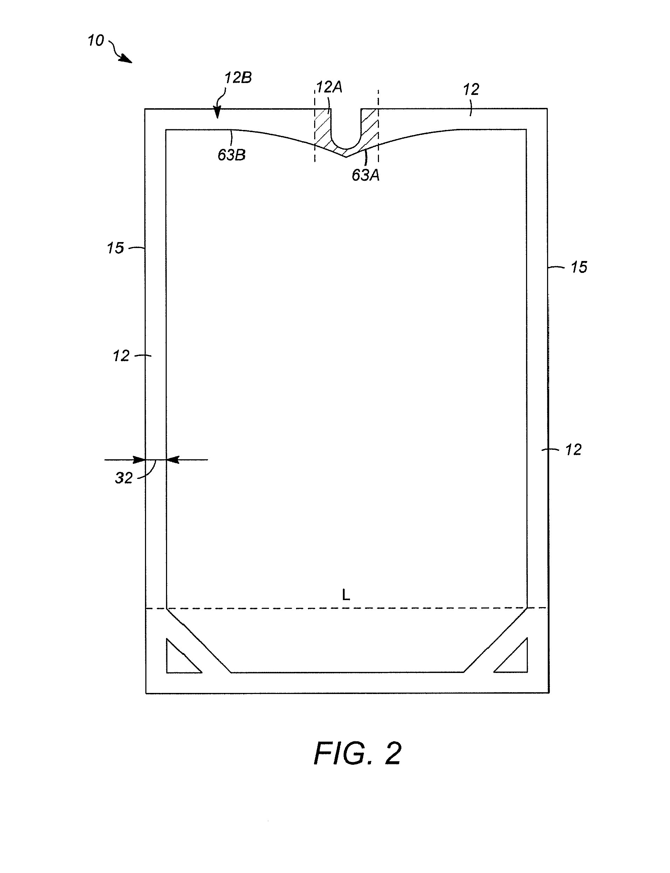

FIGS. 1 and 2 each depict an exemplary self-venting container 10 having peripheral seals 12 extending along the sides and bottom of the container. The container depicted in FIG. 2 additionally has a peripheral seal extending along the top of the container. Peripheral seals 12 may be formed from heating and compressing overlapping layers of multilayer films at the edges 15 of the container. A horizontal gusset may be inserted at a level L (indicated with a horizontal dashed line), near the bottom of container 10 to provide a specific container type, namely a gusseted pouch, having the capability of being free standing. In general, however, aspects of the invention discussed herein are broadly applicable to a wide variety of container types, including pouches having at least one, and preferably at least two, side heat seals. In addition to stand-up pouches, pillow pouches are also representative.

Peripheral seals 12 are characterized as having self-venting seal regions 12A and non-venting seal regions 12B, having differing seal widths along a width dimension that is perpendicular to the edge of the container along which the seal extends. Self-venting seal regions are marked in FIGS. 1-4C with diagonal line segments.

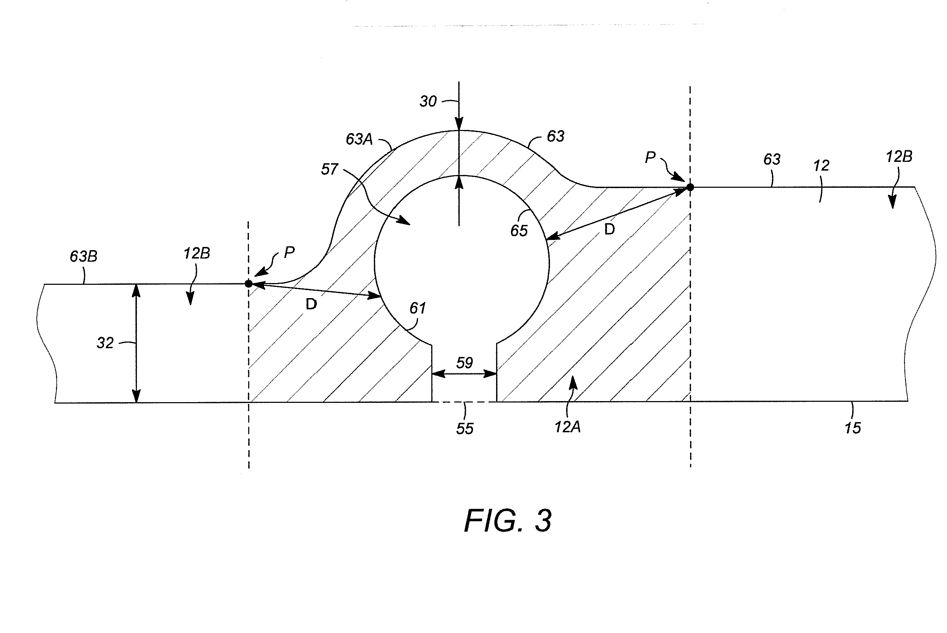

In FIGS. 1 and 2, the division between venting and non-venting seal regions 12A, 12B is shown with dashed lines extending through the peripheral seals, perpendicular to the container edges. FIG. 3 more clearly shows the basis for this division, with the dashed lines extending through transition point P on the inner boundary 63 of peripheral seal 12. At transition point P, gas escaping the container must traverse a minimum distance D across peripheral seal 12 that is at least as great as the minimum non-venting seal width 32 in non-venting seal region 12B. Therefore, gas within self-venting container 10 will require a higher pressure to escape at point P and at all other points along the inner boundary 63B of non-venting seal region 12B, compared to the relatively lower, threshold pressure required for gas to escape at points along the inner boundary 63A of self-venting seal region 12A.

The venting of gas is thereby advantageously confined to one or more specific regions of peripheral seal 12, namely self-venting seal regions 12A. Moreover, the threshold pressure at which venting occurs can be adjusted by varying the characteristics of the seal (*e.g*., thickness and seal strength) in self-venting seal region 12A. The venting of the container 10, upon exposure to sufficient microwave heating, can therefore be achieved in a controlled and desirable manner, without significant disruption, splatter, and/or loss of the container contents, to the benefit of the end user. Unlike prior art systems that rely on thermal degradation, or melting, of a film layer to achieve a self-venting property, containers according to embodiments described herein may rely on the seal geometry, including regions of varying thickness, to establish a defined venting "profile." Venting may be based on a more controllable mechanical, rather than thermal, breakage of peripheral seal 12. Therefore, as discussed above, the peripheral seal preferably does not include any film layer that melts under temperatures typically encountered in microwave cooking (or in retort processing).

As is more clearly illustrated in the close-up view, in FIG. 3, the minimum venting seal width 30 in self-venting seal region 12A is less than the minimum non-venting seal width 32 in non-venting seal region 12B. The minimum venting seal width, corresponding to the minimum distance across the peripheral seal in self-venting seal region 12A, impacts the threshold pressure, or pressure within the container (*e.g*., under microwave heating conditions), at which the onset of venting (*i.e*., the exiting of gases from within the container) occurs. According to representative embodiments, minimum venting seal width 30 is generally at most about 5 mm (0.20 in) (*e.g*., from about 0.5 mm (0.020 in) to about 5 mm (0.20 in)) and typically at most about 3.2 mm (0.125 in) (*e.g*., from about 2.4 mm (0.094 in) to about 3.2 mm (0.125 in)). The minimum non-venting seal width 32 is generally at least about 1 mm (0.039 in) (*e.g*., from about 1 mm (0.039 in) to about 10 mm (0.39 in)) and typically at least about 3.2 mm (0.125 in) (*e.g*., from about 3.2 mm (0.125 in) to about 7.5 mm (0.30 in)).

According to the embodiment of FIG. 3, peripheral seal 12 in self-venting seal region 12A forms an inward protrusion relative to peripheral seal 12 in non-venting seal region 12B. This protrusion therefore extends toward the interior, for example the center, of the region defined by edges 15 (FIGS. 1 and 2) of container 10 in non-venting seal region 12B. FIG. 3 illustrates how this configuration (or inward protrusion) of self-venting seal region 12A, together with line 55 defined by edge 15 of the container in non-venting seal region 12B, define protruded area 57. Protruded area 57, in turn, defines outer boundary 65 of self-venting seal region 12A. Protruded area 57 of FIG. 3 includes a partial circle 61, which is a substantially complete circle except for gas discharge opening 59. In alternative embodiments, the protruded area may include a less complete circle, such as a semi-circle, or may include some other area bounded by a curved shape, such as an ellipse or partial ellipse (*e.g*., a semi-ellipse). Otherwise, the protruded area may be a polygon.

The materials that are sealed to form edges 15 as discussed above (*e.g*., overlapping portions of a single multilayer film, separate multilayer films, or a multilayer film and a container bottom) may be absent from protruded area 57, for example in the case where these materials are simply punched out from peripheral seal 12. According to other embodiments, these materials may be present in protruded area 57, but in an unsealed condition, or at least partly unsealed. In this case, the unsealed materials (*e.g*., unsealed multilayer films) in protruded area 57 advantageously act as guides to direct exiting (vented) vapors, for example between the unsealed materials through discharge opening 59. Preferably, these exiting vapors will therefore be directed out the side of container 10, substantially in the plane in which peripheral seal 12 resides. However, it will be appreciated that the positioning of one or more gas discharge openings, rather than between the unsealed materials, may be varied in protruded area 57 to direct vapors upward or downward relative to this plane (*e.g*., top and bottom gas discharge openings in protruded area 57 may be used to direct vapors in a plane perpendicular to the plane in which peripheral seal 12 resides).

In any of such embodiments, in which protruded area further includes gas discharge opening 59 as shown in FIG. 3, the gas discharge opening is preferably smaller (*e.g*., of a smaller diameter), based on the minimum distance across this opening, relative to the diameter of a partial circle or relative to the smallest diameter (*e.g*., along the minor axis) of the partial ellipse. According to particular embodiments, the gas discharge opening (regardless of the shape of the protruded area) is generally at least about 2 mm (0.079 in) (*e.g*., from about 2 mm (0.079 in) to about 15 mm (0.59 in)), and typically at least about 4 mm (0.16 in) (*e.g*., from about 4 mm (0.16 in) to about 10 mm (0.39 in)). In comparison, the diameter of the partial circle or smallest diameter of the partial ellipse of the protruded area is generally at least about 7.5 mm (0.30 in) (*e.g*., from about 7.5 mm (0.30 in) to about 25 mm (1 in)) and typically at least about 10 mm (0.39 in) (*e.g*., from about 10 mm (0.39 in) to about 20 mm (0.79 in)). The use of a smaller gas discharge opening 59, relative to the diameter of the partial circle or smallest diameter of the partial ellipse, can provide for a more "focused" direction of exiting vapors.

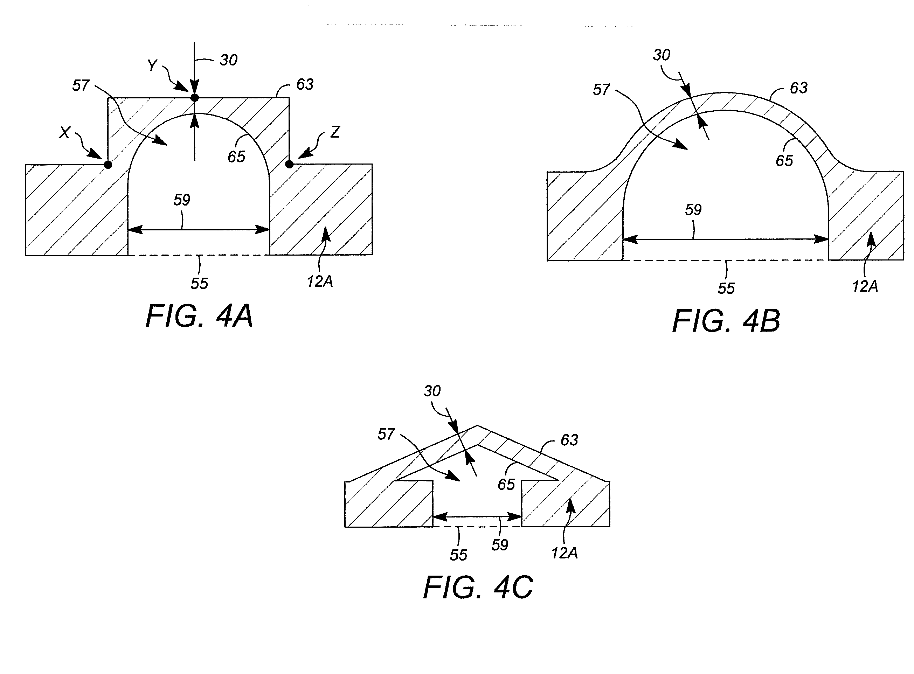

FIGS. 4A-4C, however, illustrate inward protrusions in self-venting seal regions having alternative geometries, including a gas discharge opening (FIG. 4B) that is the same as the diameter of a semi-circular protruded area 57 (or the same as an axis of an elliptical protruded area 57). In FIG. 4C, the protruded area, defined by line 55 and inward protrusion of self-venting seal region 12A, is a polygon having an arrow shape. As illustrated in FIGS. 4B and 4C, inner boundary 63 of self-venting seal region 12A has a shape that conforms substantially to the shape of the inward protrusion and consequently also to the shape of outer boundary 65. In these embodiments, the venting seal width is substantially constant over at least a portion of inner and outer boundaries 63, 65 and therefore over at least a portion (*e.g*., the majority of, and possibly all) of the self-venting seal region. This substantially constant venting seal width, in particular, corresponds to the minimum venting seal width 30. The use of a substantially constant venting seal width 30, in this manner, adds predictability to the onset of venting, namely when a desired threshold pressure is sufficient to overcome the gas barrier corresponding to the minimum venting seal width 30.

However, it is also possible, as shown in FIG. 4C for inner boundary 63 and consequently self-venting seal region 12A to have a shape that does not conform to the shape of inward protrusion. In this case, the venting seal width varies over at least a portion (*e.g*., the majority of, and possibly all) of the self-venting region. In the embodiment of FIG. 4A, the minimum venting seal width 30 may correspond to several discreet points X, Y, Z, on inner boundary 63, at which mechanical breakage of the seal is likely to occur, upon exposure to pressure and heat from within the container, due to microwaving of its contents. As is apparent from the particular embodiment of FIG. 4C, the protruded area 57 can include a partial circle or a partial ellipse, with inner boundary 63 of self-venting seal region 12A being formed by line segments. Overall, having regard for the present specification, those skilled in the art will appreciate that the specific characteristics (including geometries, materials, and seal thicknesses) of the self-venting seal region can be varied to achieve desired venting characteristics, in terms of threshold pressure, exiting gas direction, and stability.

Further aspects of the invention relate to multilayer films used in forming one or both sides of the containers described above, and particularly one or both sides of the peripheral seal. The ability of such films to withstand retort operations generally requires all film layers to have a sufficiently high melting point. As noted above, preferably such films do not include any film layer having a melting temperature of less than about 90°C (194°F), less than about 100°C (212°F), or even less than about 110°C (230°F). In the case of film layers comprising blends of polymers, the individual components of the blends may have melting temperatures that do not meet these requirements, as long as the blend itself has a sufficiently high melting temperature.

In addition, the multilayer films, as well as containers having such films, preferably have seal strength, stability, heat resistance, and oxygen and water vapor transmission properties that allow them to be subjected to retort conditions without loss of desired functional characteristics.

For example, in the case of a representative retortable containers comprising a peripheral seal as described above, even after conditions mimicking a retort heat treatment, the container has a seal strength generally from about 10 N/15 mm (3.8 lb/in) to about 200 N/15 mm (75 lb/in), and typically from about 40 N/15 mm (15 lb/in) to about 80 N/15 mm (30 lb/in), according to ASTM-F88 with a crosshead speed of 2.12 cm/sec (5 in/min). Advantageously, high seal strength stability of the container is also exhibited, based on a loss in seal strength of generally less than about 35%, typically less than about 20%, and often less than about 10%, upon being subjected to conditions mimicking a retort heat treatment. Representative conditions mimicking a retort heat treatment, corresponding to the above seal strength and seal strength stability properties, include exposure of the container to (1) a temperature of 110°C (230°F) for 30 minutes, (2) a temperature of 110°C (230°F) for 60 minutes, (3) a temperature of 135°C (275°F) for 30 minutes, or (4) a temperature of 135°C (275°F) for 60 minutes. Furthermore, multilayer films described herein also have acceptable heat resistance, in terms of not undergoing delamination. Preferably, no delamination of the film structure is observed after the film is subjected to 100°C (212°F) for 30 minutes, or even for 60 minutes. Further properties of representative films include a barrier-oxygen transmission rate of generally from about 0.16 cc/M²/day (0.01 cc/100 in²/day) to about 62 cc/M²/day (4 cc/100 in²/day), and typically from about 0.16 cc/M²/day (0.01 cc/100 in²/day) to about 1.6 cc/M²/day (0.1 cc/100 in²/day) at a temperature of 23°C (73°F), and/or a barrier-water vapor transmission rate of generally from about 0.47 g/M²/day (0.03 g/100 in²/day) to about 7.8 g/M²/day (0.5 g/100 in²/day), and typically from about 0.47 g/M²/day (0.03 g/100 in²/day) to about 3.9 cc/M²/day (0.25 g/100 in²/day) at a temperature of 100°C (212°F) and 90% relative humidity.

Representative multilayer films are also in compliance with regulations set forth under 21 C.F.R. § 177.1390, hereby incorporated by reference.

The multilayer film comprises a sealing layer that forms a peripheral seal of the container, including the self-venting and non-venting seal regions, as described above. In regions where the multilayer film is sealed (*e.g*., by heat), this sealing layer is bonded to a suitable base material, such as a rigid or flexible container bottom, for example comprising polypropylene or polyethylene. The base material may also be another multilayer film of the same type or of a different type. For example, if the multilayer film is folded upon itself and heat sealed at overlapping edges to provide a container volume bounded by non-sealed areas of the film, the multilayer film and base material, as well as the sealing layers being bonded, are necessarily the same. In regions where the multilayer film is not sealed, the sealing layer is the innermost layer, facing the interior of the container and often contacting the container contents, such as food, directly.

A preferred sealing layer comprises (*e.g*., in a major amount of greater than 50% by weight), or consists essentially of (1) a polypropylene or (ii) a blend of polypropylene and at least one other polyolefin. Polyolefins include polyolefin plastomers, such as, for example polyethylene that may be blended in the sealing layer. The sealing layer may also comprise (*e.g*., in a major amount of greater than 50% by weight), or consist essentially of (i) a cast retortable grade polypropylene (ii) a coextruded polypropylene polymer or copolymer, or (iii) a blend of a coextruded polypropylene polymer or copolymer and at least one other polyolefin. In one particular embodiment, the sealing layer comprises 100% by weight of cast retortable grade polypropylene. A particular, representative cast retortable grade polypropylene has a density of about 0.9 g/cm³ (*e.g*., in the range from about 0.85 g/cm³ to about 0.95 g/cm³) and melt flow index of 2.1 g/10 min (*e.g*., in the range from about 1.9 g/10 min to about 2.3 g/10 min), such as, for example, KAP High Performance CPP (Amcor Flexibles Venturina S.r.l., Campiglia Marittima, Italy).

The thickness of the sealing layer is generally from about 10 µm (0.39 mils) to about 500 µm (20 mils), and typically from about 50 µm (2 mils) to about 200 µm (7.9 mils). In addition to the sealing layer, the multilayer film further comprises an outer layer facing the exterior of the container and disposed furthest from the container contents. In the case of 2-layer films, the outer layer and sealing layer are adjacent and bonded directly to one another. In the case of films comprising further layers *(i.e.,* 3 or more total layers), the outer and sealing layers are not adjacent, but separated by these further layers, being disposed therebetween. A representative outer layer comprises (*e.g*., in a major amount of greater than 50% by weight), or consists essentially of, (i) biaxially oriented nylon or (ii) biaxially oriented polyethylene terephthalate. A suitable biaxially oriented nylon is Nylon 6 such as Filmon BXS Nylon 6 (CFP Flexible Packaging S.p.A., Cesano Maderno, IT). A suitable biaxially oriented polyethylene terephthalate source is IB-PET-RB (Dai Nippon Printing Co., LTD., Tokyo, Japan). The thickness of the outer layer is generally from about 1 µm (0.039 mils) to about 100 µm (3.9 mils), and typically from about 7.5 µm (0.30 mils) to about 25 µm (0.98 mils).

In representative films comprising 3 or more layers, an adhesive layer or a primer layer may be disposed between the outer and sealant layers. In the particular case of a 3-layer film, the adhesive or primer may be adjacent both the outer and sealant layers (*i.e*., sandwiched between these layers). Suitable adhesives include 2-component polyurethanes such as Adcote^{™} 812/9L10 (Rohm & Haas Company, Philadelphia, PA USA), having a solids content of about 32%. Suitable primers include aqueous resin dispersions such as MICA A-131 (Mica Corporation, Shelton, CT USA), having a solids content of about 5%.

In representative films comprising more than 3 layers, in addition to an adhesive or primer layer, such multilayer films may also comprise (i) one or more further biaxially oriented nylon or biaxially oriented polyethylene terephthalate layers, having a layer thickness as described above with respect to the outer layer, and/or (ii) one or more further adhesive or primer layers, as described above. Otherwise, such multilayer films may also comprise functional layers, including functional barrier layers such as aluminum foil. The thickness of a functional layer, when used, is generally from about 1 µm (0.039 mils) to about 100 µm (3.9 mils), and typically from about 5 µm (0.20 mils) to about 10 µm (0.39 mils).

The total thickness of a representative, multilayer film used in a self-venting, retortable container, as described herein, is generally from about 51 µm (2 mils) to about 380 µm (15 mils), and typically from about 74 µm (2.9 mils) to about 150 µm (6 mils).

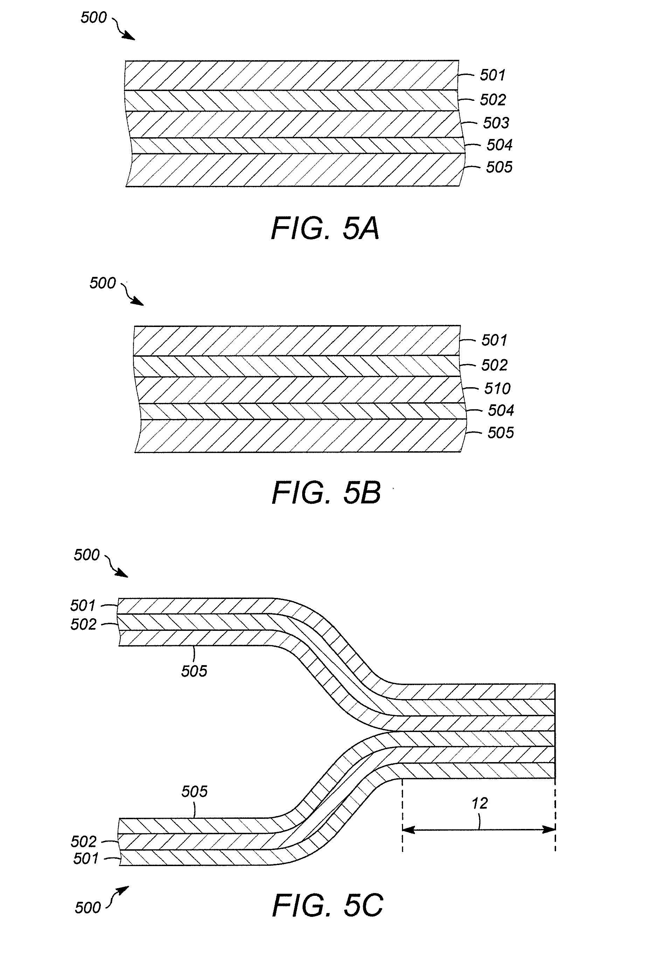

A cross-sectional view of a representative 5-layer film 500, for example, is depicted in FIG. 5A, having the following layers, in order: an outer layer of biaxially oriented polyethylene terephthalate 501, a polyurethane adhesive layer 502, a biaxially oriented nylon layer 503, a second polyurethane adhesive layer 504, and a polypropylene sealant layer 505. A cross-sectional view of another representative 5-layer film 500, for example, is depicted in FIG. 5B, having the following layers, in order: an outer layer of biaxially oriented polyethylene terephthalate 501, a polyurethane adhesive layer 502, an aluminum foil layer 510, a second polyurethane adhesive layer 504, and a polypropylene sealant layer 505.

The cross-sectional view of FIG. 5C depicts the sealing between adjacent sealant layers 505, in either the self-venting region or non-venting region of peripheral seal 12 of a container as described herein. Sealing occurs between two identical 3-layer films, or otherwise a single 3-layer film that has been folded (*e.g*., with the fold not shown but occurring beyond the left side of the page). In addition to sealant layers 505, the films also include adhesive layers 502 and outer layers 501, as described above.

Overall, aspects of the invention are directed to self-venting, retortable containers and multilayer films suitable for use in such containers. Characteristics of the multilayer films, in combination with characteristics of the self-venting seal regions, provide containers having desirable venting properties as described herein. Those having skill in the art, with the knowledge gained from the present disclosure, will recognize that various changes can be made in these containers and multilayer films without departing from the scope of the present invention. Mechanisms used to explain theoretical or observed phenomena or results, shall be interpreted as illustrative only and not limiting in any way the scope of the appended claims.

The following examples are set forth as representative of the present invention. These examples are not to be construed as limiting the scope of the invention as other equivalent embodiments will be apparent in view of the present disclosure and appended claims.

### COMPARATIVE EXAMPLE 1

### Seal Strength of a Non-Retortable Film

A film for use in non-retortable packing was prepared and evaluated for seal strength properties according to ASTM-F88 with a crosshead speed of 2.12 cm/sec (5 in/min).

Specifically, the film had the following structure, from the outer to the inner (sealing or food contact) layer:
- Layer 1 (outer):: (50 gauge) polyvinylidene chloride (PVDC) coated onto oriented polyethylene terephthalate (OPET)-Skyrol SX03 (SKC Inc., Covington, GA USA)
- Layer 2 (adhesive):: two-part solventless urethane adhesive-Tycel 7668/7276 (Henkel, Duesseldorf, Germany)
- Layer 3:: 65.70 wt-% linear low density polyethylene (LLDPE)-Exxon 1001.32 (Exxon Chemical Company, Irving, TX USA) + 30.00 wt-% low density polyethylene (LDPE)-Dow 608A (Dow Chemical Company, Midland, MI USA) + 4.3 wt-% additives
- Layer 4:: 76 wt-% ethylene vinyl acetate (EVA) having 12 mol-% acetate-DuPont 3135XZ (DuPont, Wilmington, DE USA) + 19 wt-% polybutene-1 (PB)-8640M (Sasell Service Company, B.V.) + 5% wt-% low density polyethylene (LDPE)-Dow 608A (Dow Chemical Company, Midland, MI USA)
- Layer 5 (sealing):: 83 wt-% polypropylene (PP)-Pro-fax SA861 (LyondellBasell Industries, Rotterdam, Netherlands) + 15 wt-% low density polyethylene (LDPE)-Dow 608A (Dow Chemical Company, Midland, MI USA) + 2 wt-% additives

This 5-layer film was sealed with top, side, and gusset seals to form a gusseted pouch. Following retort processing, the peak seal strength of each of the seals was evaluated according to ASTM-F88 with a crosshead speed of 2.12 cm/sec (5 in/min). The results of this testing are shown in Table 1 below.

**Table 1—Peak Seal Strength, lbs/in**

| Top | Side | Gusset |
|---|---|---|
| 1.35 | 1.52 | 1.39 |
| 1.26 | 1.78 | 1.20 |
| 1.29 | 1.70 | 1.18 |
| 1.33 | 1.62 | 1.21 |
| 1.27 | 1.64 | 1.11 |
| 1.26 | 1.56 | 1.10 |
| 1.30 | 1.31 | **Mean: 1.20** |
| 1.29 | 1.33 | |
| **Mean: 1.29** | 1.70 | |
| | 1.35 | |
| | 1.45 | |
| | 1.33 | |
| | **Mean: 1.52** | |

### EXAMPLE 1

### Oxygen and Water Vapor Transmission Rates of a Representative Flexible 5-Layer Film

A 5-layer film, according to a representative film structure of the present invention, was prepared and tested for its barrier oxygen and water vapor transmission rate. Specifically, the film had the following structure:
- Layer 1 (outer):: aluminum oxide coated biaxially oriented polyethylene terephthalate film, (OPET), reverse printed- IB-PET-RB (Dai Nippon Printing Co., LTD., Tokyo, Japan)
- Layer 2 (adhesive):: 2-component polyurethane-Adcote^{™} 812/9L10 (Rohm & Haas Company, Philadelphia, PA USA)
- Layer 3:: biaxially oriented nylon (BON)-Filmon BXS Nylon 6 (CFP Flexible Packaging S.p.A., Cesano Maderno, IT)
- Layer 4 (adhesive):: 2-component polyurethane-Adcote^{™} 812/9L10 (Rohm & Haas Company, Philadelphia, PA USA)
- Layer 5 (sealing):: cast retortable grade polypropylene KAP (Amcor Flexibles Ventura S.r.I., Campiglia Marittima, Italy)
The oxygen and water vapor transmission rates across this 5-layer film were tested. The oxygen transmission rate was evaluated at 23°C (73°F) (50% relative humidity in, 30% relative humidity out), and the results are shown in Table 2 below.

| **Table 2 OXYGEN TRANSMISSION RATE** | | | |
|---|---|---|---|
| | **cc/M²/day** | **cc/100in²/day** | Caliper mils |
| front | 0.49 | 0.03 | 4.2 |
| back | 0.64 | 0.04 | 4.2 |
| | | | |
| front | 0.40 | 0.03 | 4.2 |
| back | 1.23 | 0.08 | 4.2 |
| | | | |
| front | 0.97 | 0.06 | 4.3 |
| back | 0.80 | 0.05 | 4.5 |

The water vapor transmission rate was evaluated at 38°C (100°F) at 90% relative humidity, and the results are shown in Table 3 below.

| **Table 3 WATER VAPOR TRANSMISSION RATE** | | | |
|---|---|---|---|
| | **cc/M²/day** | **cc/100in²/day** | Caliper mils |
| front | 1.84 | 0.119 | 4.39 |
| back | 2.68 | 0.173 | 4.32 |
| | | | |
| front | 1.41 | 0.091 | 4.37 |
| back | 2.85 | 0.184 | 4.25 |
| | | | |
| front | 2.18 | 0.141 | 4.61 |
| back | 1.27 | 0.082 | 4.40 |

### EXAMPLE 2

### Seal Strength of a Representative, Flexible 5-layer Film

The 5-layer film described in Example 1 was sealed with top, side, and gusset seals to form 3 separated, gusseted pouches. Following retort processing, the strength of each of these seals was evaluated according to ASTM-F88 with a crosshead speed of crosshead speed of 2.12 cm/sec (5 in/min). The results of this testing are shown in Tables 4-6 below:

| **Table 4. Pouch Sample #1** | | | |
|---|---|---|---|
| | Seal Strength in | | |
| | lb/in | | |
| | TOP | SIDE | GUSSET |
| | 34.5 | 26.0 | 30.7 |
| | 32.0 | 26.6 | 31.5 |
| | 34.8 | 25.4 | 18.5 |
| | 30.1 | 24.5 | 27.7 |
| | 35.2 | 25.5 | 27.5 |
| | 33.8 | 25.6 | 32.1 |
| **Mean**: | **33.4** | **25.6** | **28.0** |

| **Table 5. Pouch Sample #2** | | |
|---|---|---|
| Seal Strength in | | |
| lb/in | | |
| TOP | SIDE | GUSSET |
| 18.7 | 25.7 | 27.8 |
| 29.2 | 25.8 | 27.2 |
| 24.6 | 25.9 | 29.0 |
| 22.8 | 27.1 | 19.7 |
| 31.6 | 27.1 | 23.8 |
| 34.0 | 24.2 | 28.6 |
| **26.8** | **26.0** | **26.0** |

| **Table 6. Pouch Sample #3** | | | |
|---|---|---|---|
| | Seal Strength in | | |
| | lb/in | | |
| | TOP | SIDE | GUSSET |
| | 30.2 | 24.7 | 27.7 |
| | 27.4 | 25.2 | 19.7 |
| | 26.4 | 25.0 | 24.8 |
| | 20.3 | 25.9 | 17.0 |
| | 23.4 | 25.9 | 22.4 |
| | 23.4 | 25.8 | 27.9 |
| **Mean:** | **25.2** | **25.4** | **23.3** |

These examples illustrate properties of the 5-layer film of Example 1 in terms of its suitability for retortable containers, and in particular for the self-venting, microwaveable applications. The measured seal strength was considerably higher than that obtained using the film of Comparative Example 1. This high seal strength was obtained following a standard retort processing operation.

## Claims

1. A retortable container comprising a peripheral seal formed by a sealing layer of a multilayer film,
the peripheral seal having at least one self-venting seal region with a minimum venting seal width that is less than a minimum non-venting seal width of a non-venting seal region,
wherein
the peripheral seal does not include any film layer having a melting temperature of less than 100°C; and/or
following a retort heat treatment, the container has a seal strength from about 40 N/15 mm (15 lb/in) to about 80 N/15 mm (30 lb/in) according to ASTM-F88 with a crosshead speed of 2.12 cm/sec (5 in/min); and/or
the multilayer film does not delaminate after being subjected to a temperature of 100°C for 30 minutes.

2. A retortable container comprising a peripheral seal formed by a sealing layer of a multilayer film,
wherein the peripheral seal in a self-venting seal region forms an inward protrusion relative to the peripheral seal in a non-venting seal region, and
the peripheral seal does not include any film layer having a melting temperature of less than 100°C.

3. A retortable container according to claim 1 or 2, wherein gas is discharged through the self-venting seal region when the pressure within the container exceeds a threshold pressure from about 2 psig to about 5 psig.

4. A retortable container according to any preceding claim, wherein the multilayer film does not delaminate after being subjected to a temperature of 100°C for 60 minutes.

5. A retortable container according to any preceding claim, wherein the minimum venting seal width is at most about 3.2 mm (0.125 inches), preferably from about 2.4 mm (0.094 inches) to about 3.2 mm (0.125 inches), and the minimum non-venting seal width is at least about 3.2 mm (0.125 inches).

6. A retortable container according to any preceding claim, wherein the peripheral seal in the self-venting seal region forms an inward protrusion relative to the peripheral seal in the non-venting seal region.

7. A retortable container according to claim 6, wherein the inward protrusion, and a line defined by an edge of the container in the non-venting seal region, define a protruded area.

8. A retortable container according to claim 7, wherein the protruded area includes a partial circle or a partial ellipse.

9. A retortable container according to claim 8, wherein the protruded area further includes a gas discharge opening of a smaller diameter, relative to the diameter of the partial circle or relative to the smallest diameter of the partial ellipse.

10. A retortable container according to claim 9, wherein the diameter of the gas discharge opening is at least 4 mm (0.16 inches) and the diameter of the partial circle or the smallest diameter of the partial ellipse is at least 10 mm (0.39 inches).

11. A retortable container according to any of claims 1 to 7, wherein the protruded area is a polygon.

12. A retortable container according to any of claims 6 to 11, wherein an inner boundary of the self-venting seal region has a shape that conforms substantially to the shape of the inward protrusion, whereby the venting seal width is substantially constant over at least a portion of the self-venting seal region.

13. A retortable container according to any of claims 6 to 11, wherein an inner boundary of the self-venting seal region has a shape that does not conform to the shape of the inward protrusion, whereby the venting seal width varies over at least a portion of the self-venting region.

14. A retortable container according to claim 11, wherein the protruded area includes a partial circle or a partial ellipse and an inner boundary of the self-venting seal region is formed by line segments.

15. A retortable container according to any preceding claim, wherein the sealing layer of the multilayer film comprises polypropylene.

16. A retortable container according to claim 15, wherein the multilayer film includes an outer layer comprising biaxially oriented nylon or biaxially oriented polyethylene terephthalate that is optionally separated from the sealing layer by an adhesive layer.

17. A retortable container according to claim 15 or 16, wherein the multilayer film has a barrier-oxygen transmission rate from about 0.01 to about 4 cc/100 in²/24 hours at a temperature of 23°C (73°F).
